# EUROPEAN PATENT SPECIFICATION

(11) **EP 2 891 776 B1**
(45) Date of publication and mention of the grant of the patent: **26.07.2017**
(21) Application number: 12872309.5
(22) Date of filing: 30.08.2012
(51) Int. Cl.: F01N 3/08, F01N 3/20, F01N 3/22, F01N 5/04, F01N 13/02

(54) **ADDITIVE SUPPLY DEVICE FOR INTERNAL COMBUSTION ENGINES**
ZUSATZSTOFFZUFUHRVORRICHTUNG FÜR VERBRENNUNGSMOTOREN
DISPOSITIF D'ALIMENTATION EN ADDITIF POUR MOTEURS À COMBUSTION INTERNE

(43) Date of publication of application: 08.07.2015
(73) Proprietor: TOYOTA JIDOSHA KABUSHIKI KAISHA, Toyota-shi, Aichi-ken, 471-8571 (JP)
(72) Inventor: SUZUKI, Hayato, Toyota-shi, Aichi-ken, 471-8571 (JP); OTA, Hirohiko, Toyota-shi, Aichi-ken, 471-8571 (JP)
(74) Representative: Kuhnen & Wacker
(86) International application number: PCT/JP2012/072074
(87) International publication number: WO 2014/033883

(56) References cited:
- EP-A1- 2 439 384
- JP-B2- 4 179 386
- JP-B2- 4 388 103

## Description

### TECHNICAL FIELD

The present invention relates to an additive feeder for an internal combustion engine.

### BACKGROUND ART

Conventionally, various additive feeders each provided with an injection valve for supplying additives to a catalyst that purifies exhaust gas components generated by combustion of air-fuel mixture in cylinders are known. Such additive feeders adjust the amount of the additives injected through the injection valve (hereinafter, referred to as "amount of addition") in accordance with the amount of the exhaust gas components generated in the cylinders.

For example, in the feeder disclosed in JP 2000-265828 A, aqueous urea solution as an additive is injected through the injection valve to the catalyst to purify NOx as one of the exhaust gas components by the catalyst. The amount of aqueous urea solution injected through the injection valve is adjusted in accordance with the amount of NOx generated in the cylinders.

Another exhaust purification system of an internal combustion engine as disclosed by EP 2 439 384 A1 is provided with a first NOx selective reduction catalyst which is arranged inside of an engine exhaust passage and which selectively reduces NOx by feed of a reducing agent, a second NOx selective reduction catalyst which is arranged inside of the engine exhaust passage at the downstream side of the first NOx selective reduction catalyst and which selectively reduces NOx by feed of a reducing agent, and a reducing agent feed device which feeds a reducing agent to the first NOx selective reduction catalyst. The system estimates the amount of adsorption of the reducing agent which is adsorbed at the second NOx selective reduction catalyst and prevents the estimated amount of adsorption of the reducing agent from exceeding the allowable value by adjusting the amount of feed of reducing agent from the reducing agent feed device.

### SUMMARY OF THE INVENTION

### Problems that the Invention is to Solve

The injection valve has minimum valve open time during which additive is injected. Accordingly, an amount of the additive less than the minimum amount of addition of the additive obtained by the minimum valve open time and the injection pressure cannot be injected through the injection valve.

In contrast, in the case of low load operation of the engine, when the amount of the generated exhaust gas components is considerably small, the amount of addition of additive in accordance with the amount of the generated exhaust gas components is likely to be less than the minimum amount of addition of the additive. In this case, the amount of the actually injected additive is greater than the amount of the additive in accordance with the amount of the generated exhaust gas components. Therefore, an excess amount of the additive with respect to the amount of the generated exhaust gas components is likely to be injected.

Accordingly, it is an object of the present invention to provide an additive feeder for an internal combustion engine that can prevent injection of an excess amount of additives with respect to the amount of the generated exhaust gas component.

### Means for Solving the Problems

To achieve the above described object, the present invention provides an additive feeder for an internal combustion engine according to claim 1, including: a catalyst in form of a SCR catalyst; an injection valve; a detection portion; and a control portion. The catalyst purifies NOx generated by combustion of an air-fuel mixture in a cylinder. The injection valve injects an additive in form of a reducing agent and adds the additive to the catalyst. The detection portion detects an amount of the exhaust gas component that is generated. The control portion controls an amount of the additive injected through the injection valve. According to the invention, the catalyst is a SCR catalyst configured to adsorb an exhaust gas purifying component that is generated from the reducing agent and reduces NOx and to use the adsorbed purifying component to purify the NOx. When an engine operation state is not in a transition state but in a normal operation state, the control portion computes an integrated value of the amount of the generated NOx from when the additive was injected previously, and performs an addition process in which the control portion causes the injection valve to inject the additive after the integrated value has become greater than or equal to a reference value.

While performing the above described addition process, the control portion of the above described additive feeder injects the additive after the integrated value of the amount of the generated NOx becomes greater than or equal to the reference value. Accordingly, when the above described addition process is performed, the injection of the additive is not performed while the amount of the generated NOx is less than the reference value. Accordingly, the addition of the additive is limited in the case where the amount of generated NOx is so small that the amount of addition of the additive in accordance with the amount of the generated NOx is less than the minimum amount by which the additive can be injected through the injection valve, for example. Therefore, according to the above described additive feeder, the injection of an excess amount of the additives with respect to the amount of the generated NOx is prevented.

As for the detection of the amount of the generated NOx by the above described detection portion, the amount may be directly detected by using a sensor, or the amount may be indirectly detected by estimating the amount of the generated NOx from the engine operation state.

According to the aspect of the present invention, the catalyst adsorbs an exhaust gas purifying component from the additives, and uses the adsorbed purifying component to purify the NOx. In this case, the purification of the NOx during a period in which the integrated value of the amount of the generated NOx is less than the reference value so that the injection of the additive is not performed is performed by using the purifying component adsorbed by the catalyst. Therefore, the NOx can be purified even in the period in which the injection of the additive is not performed.

According to the aspect of the present invention, when the engine operation state is in the transition state, the control portion stops computation of the integrated value of the amount of generated NOx and causes an amount of the additive in accordance with the amount of the generated NOx detected by the detection portion to be injected through the injection valve.

When the engine operation state is in the transition state, the amount of the generated NOx varies more greatly than in a normal operation state. If the computation of the above described integrated value cannot follow the variation of the amount of the generated NOx, a gap is generated between the actual integrated value of the amount of the generated NOx and the integrated value on the computation. Accordingly, in some cases, even if the actual integrated value is greater than or equal to the reference value, the injection of the additives is not performed so that the NOx are likely to be not appropriately purified. In other cases, even if the actual integrated value is less than the reference value, the injection of the additive is performed so that an excess amount of the additives with respect to the amount of the generated NOx is likely to be injected. Accordingly, the control portion stops the computation of the above described integrated value when the engine operation state is in the transition state. The control portion then causes an amount of the additive in accordance with the amount of the generated NOx detected by the above described detection portion to be injected through the injection valve. Accordingly, even if the computation of the above described integrated value is stopped, an amount of the additive in accordance with the amount of the generated NOx is added. Even if the engine operation state is in the transition state, the exhaust gas components can be appropriately purified, and the injection of the excess amount of the additive with respect to the amount of the generated NOx can be limited.

It is preferable that the reference value be set to a value greater than or equal to an amount of purification of the NOx that can be purified by the minimum amount of the additive injectable through the injection valve.

According to an aspect of the present invention, when injecting the additive according to the addition process, the control portion causes an amount of the additive in accordance with the integrated value to be injected through the injection valve. In this case, when the integrated value of the amount of the generated NOx is greater than or equal to the reference value so that the injection of the additive is performed, an amount of the additive in accordance with the integrated value is injected through the injection valve. Therefore, the amount of adsorption of the purifying component consumed by the above described catalyst during the period in which the injection of the additive is not performed can be recovered.

### BRIEF DESCRIPTION OF THE DRAWINGS

Fig. 1 is a diagram schematically showing an additive feeder according to an embodiment of the present invention, an internal combustion engine to which the additive feeder is applied, and peripheral components thereof; and
Fig. 2 is a flowchart showing a procedure of addition process of aqueous urea solution according to the present embodiment.

### MODES FOR CARRYING OUT THE INVENTION

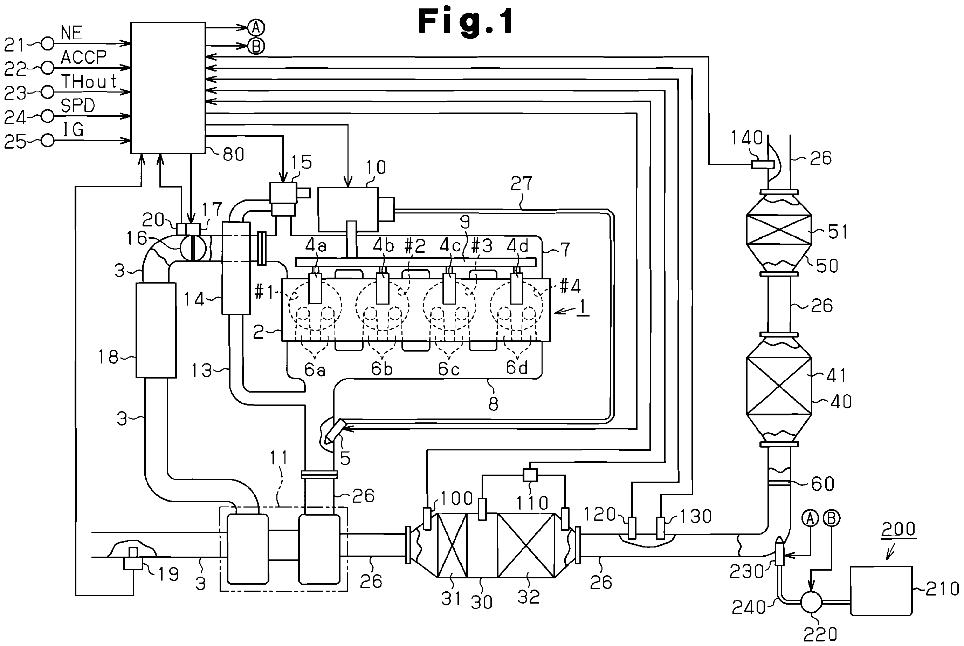

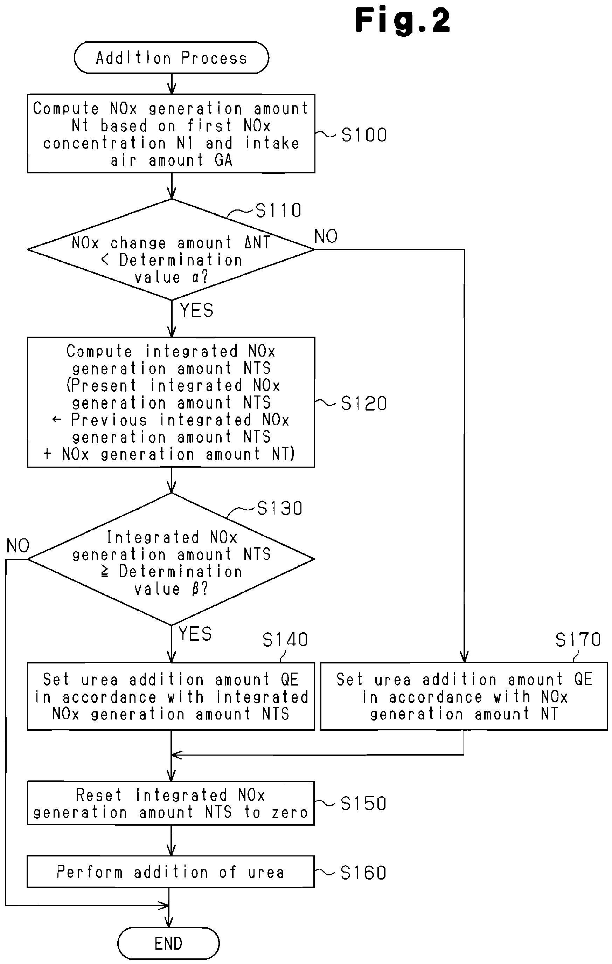

Hereinafter, an additive feeder for an internal combustion engine according to an embodiment of the present invention will be described with reference to Figs. 1 and 2.

Fig. 1 is a configuration diagram schematically showing a diesel engine (hereinafter, referred to as simply "engine") to which the additive feeder according to the present embodiment is applied, and peripheral components thereof.

A plurality of cylinders #1 to #4 are formed in an engine 1. A plurality of fuel injection valves 4a to 4d are attached to a cylinder head 2. The fuel injection valves 4a to 4d inject fuel to combustion chambers of the corresponding cylinders #1 to #4. Intake ports for introducing new air into the cylinders and exhaust ports 6a to 6d for exhausting combustion gas out of the cylinders, respectively corresponding to the cylinders #1 to #4 are formed in the cylinder head 2.

The fuel injection valves 4a to 4d are connected to a common rail 9 that accumulates high pressure fuel. The common rail 9 is connected to a supply pump 10. The supply pump 10 draws fuel in a fuel tank and supplies the common rail 9 with the high pressure fuel. The high pressure fuel supplied to the common rail 9 is injected into the cylinders through the corresponding fuel injection valves 4a to 4d when the fuel injection valves 4a to 4d are open.

An intake manifold 7 is connected to the intake port. The intake manifold 7 is connected to an intake passage 3. An intake throttle valve 16 that adjusts the amount of intake air is provided in the intake passage 3.

An exhaust manifold 8 is connected to the exhaust ports 6a to 6d. The exhaust manifold 8 is connected to an exhaust passage 26.

A turbocharger 11 that supercharges the intake air introduced into the cylinders using the exhaust gas pressure is provided in the middle of the exhaust passage 26. An intercooler 18 is provided in the intake passage 3 between an intake side compressor of the turbocharger 11 and the intake throttle valve 16. The intercooler 18 provides for cooling of the intake air the temperature of which has been increased due to supercharging performed by the turbocharger 11.

A first purification member 30 that purifies the exhaust gas is provided in a section of the exhaust passage 26 that is downstream of an exhaust side turbine of the turbocharger 11. The first purification member 30 contains an oxidation catalyst 31 and a DPF catalyst 32, which are arranged in series with respect to the flow direction of the exhaust gas.

The oxidation catalyst 31 supports a catalyst that oxidizes HC in the exhaust gas. The DPF catalyst 32 is configured by a porous ceramic as a filter that catches particulate matter (PM) in the exhaust gas, and supports a catalyst that promotes oxidization of the PM. The PM in the exhaust gas is caught when passing through a porous wall of the DPF catalyst 32.

A fuel addition valve 5 for supplying the oxidation catalyst 31 and the DPF catalyst 32 with fuel as additives is provided in the vicinity of a collective part of the exhaust manifold 8. The fuel addition valve 5 is connected to the supply pump 10 via a fuel feeding tube 27. The position at which the fuel addition valve 5 is arranged may be changed as long as it is located upstream from the first purification member 30 in the exhaust system.

Further, a second purification member 40 that purifies the exhaust gas is provided in a section of the exhaust passage 26 that is downstream of the first purification member 30. The second purification member 40 contains a selective reduction type NOx catalyst (hereinafter, referred to as SCR catalyst) 41. The SCR catalyst 41 is a NOx purification catalyst that purifies nitrogen oxide (NOx) as a constituent contained in the exhaust gas using a reducing agent.

Moreover, a third purification member 50 that purifies the exhaust gas is provided in a section of the exhaust passage 26 that is downstream of the second purification member 40. The third purification member 50 contains an ammonia oxidation catalyst 51 that purifies ammonia in the exhaust gas.

The engine 1 has an aqueous urea solution feeding mechanism 200, which supplies the above described SCR catalyst 41 with aqueous urea solution as additives. The aqueous urea solution feeding mechanism 200 is configured by a tank 210 that stores aqueous urea solution, a urea injection valve 230 that injects and feeds aqueous urea solution into the exhaust passage 26, a feeding tube 240 that connects aqueous urea solution injection valve 230 with the tank 210, and a pump 220 located in the feeding tube 240.

The urea injection valve 230 is located in the exhaust passage 26 between the first purification member 30 and the second purification member 40, and the nozzle thereof is open toward the SCR catalyst 41. When the urea injection valve 230 is opened, aqueous urea solution is injected and fed into the exhaust passage 26 via the feeding tube 240.

The pump 220 is motor-driven and pumps aqueous urea solution from the tank 210 to the urea injection valve 230 when rotating in the normal direction. In contrast, aqueous urea solution is pumped from the urea injection valve 230 to the tank 210 when the pump 220 is rotating in the reverse direction. That is, when the pump 220 rotates in the reverse direction, aqueous urea solution is collected from the urea injection valve 230 and the feeding tube 240 to be returned to the tank 210.

A dispersion plate 60, which promotes atomizing aqueous urea solution by dispersing aqueous urea solution injected through the urea injection valve 230, is located in the exhaust passage 26 between the urea injection valve 230 and the SCR catalyst 41.

The aqueous urea solution injected and atomized through the urea injection valve 230 hydrolyzes in the exhaust gas to generate ammonia to be adsorbed by the SCR catalyst 41. NOx is reduced and purified by the ammonia adsorbed by the SCR catalyst 41.

Further, the engine 1 includes an exhaust gas recirculation system (hereinafter, referred to as EGR system). The EGR system reduces the combustion temperature in the cylinders by introducing part of the exhaust gas into the intake air to reduce the amount of the generated NOx. The exhaust gas recirculation system includes an EGR passage 13 that communicates the intake passage 3 with the exhaust manifold 8, an EGR valve 15 located in the EGR passage 13, and an EGR cooler 14. The amount of the recirculated exhaust gas, namely the amount of external EGR, which is introduced from the exhaust passage 26 to the intake passage 3, is adjusted by adjusting the opening degree of the EGR valve 15. Further, the temperature of the exhaust gas that flows through the inside of the EGR passage 13 is reduced by the EGR cooler 14.

The engine 1 is equipped with various sensors for detecting the engine operation state. For example, an air flow meter 19 detects an amount GA of the intake air in the intake passage 3. A throttle valve opening degree sensor 20 detects the opening degree of the intake throttle valve 16. An engine rotational speed sensor 21 detects rotational speed of the crankshaft, namely engine rotational speed NE. An accelerator operation amount sensor 22 detects the amount of depressing operation of the accelerator pedal (accelerator operation member), namely an accelerator operation amount ACCP. An ambient temperature sensor 23 detects an ambient temperature THout. A vehicle speed sensor 24 detects a vehicle speed SPD of the vehicle on which the engine 1 is mounted. An ignition switch 25 detects the starting operation and the stopping operation of the engine 1 by the driver of the vehicle.

A first exhaust gas temperature sensor 100 located upstream of the oxidation catalyst 31 detects a first exhaust gas temperature TH1 as an exhaust gas temperature prior to flowing into the oxidation catalyst 31. A differential pressure sensor 110 detects a pressure difference ΔP between an exhaust gas pressure upstream of and an exhaust gas pressure downstream of the DPF catalyst 32.

A second exhaust gas temperature sensor 120 and a first NOx sensor 130 are located in a section in the exhaust passage 26 that is between the first purification member 30 and the second purification member 40 and is upstream of the urea injection valve 230. The second exhaust gas temperature sensor 120 detects a second exhaust gas temperature TH2 as an exhaust gas temperature prior to flowing into the SCR catalyst 41. The first NOx sensor 130 detects the amount of NOx contained in the exhaust gas prior to flowing into the SCR catalyst 41, namely the amount of NOx generated by combustion of air-fuel mixture in the cylinders. More specifically, the first NOx sensor 130 detects the concentration (unit: ppm) of NOx in the exhaust gas as a first NOx concentration N1. The first NOx sensor 130 corresponds to the detection portion.

A second NOx sensor 140 that detects the concentration of NOx in the exhaust gas purified by the SCR catalyst 41 as a second NOx concentration N2 is provided in a section of the exhaust passage 26 that is further downstream of the third purification member 50.

Output signals of these sensors are supplied to a control unit 80, which serves as the control portion. The control unit 80 is mainly formed of a microcomputer having a central processing unit (CPU), a read only memory (ROM) storing various types of programs and maps in advance, a random access memory (RAM) for temporarily storing the result of computation of the CPU, a timer counter, an input interface, and an output interface.

The control unit 80 performs, for example, the control of the amount of the fuel injection and the control of the timing of the fuel injection of the fuel injection valves 4a to 4d and the fuel addition valve 5, the control of the pressure of the ejection of the supply pump 10, the control of the amount of driving of an actuator 17 that opens and closes the intake throttle valve 16, the control of the opening degree of the EGR valve 15, and various types of control of the engine 1.

The control unit 80 also performs the control of addition of aqueous urea solution through the above described urea injection valve 230 as one of the exhaust gas purification controls. The control unit 80 performs, as the control of addition, the control of equivalence ratio, which sets an amount QE of addition of urea (amount of injection of the urea) in accordance with the amount of NOx generated by the combustion of the air-fuel mixture in the cylinders, and the adsorption control such that a predetermined amount of ammonia is constantly adsorbed by the SCR catalyst 41.

In the equivalence ratio control, the amount QE of addition of urea necessary for reducing NOx generated in the cylinders is computed in accordance with the amount of the generated NOx, more strictly, the amount of NOx prior to being purified by the SCR catalyst 41. In consideration of the computed urea addition amount QE, and the supply pressure of aqueous urea solution supplied to the urea injection valve 230, the valve open time of the urea injection valve 230 is set, and the opening and closing operations of the urea injection valve 230 are controlled. According to the equivalence ratio control, the amount of addition of the urea is adjusted in accordance with the amount of NOx generated in the cylinders.

In the adsorption control, a target amount of ammonia absorbed by the SCR catalyst 41 is set on the basis of the temperature of the SCR catalyst 41 (the second exhaust gas temperature TH2 can be approximately substituted for it). The amount of the ammonia adsorbed by the SCR catalyst 41 is estimated by an appropriate method. For example, the amount of the actually adsorbed ammonia is estimated on the basis of parameters correlated with the amount of the adsorbed ammonia such as the amount of addition of the urea, the exhaust gas temperature, and the amount of flowing exhaust gas. The aqueous urea solution is added until the amount of the actually adsorbed ammonia reaches the target amount of adsorption. As described above, a certain amount of ammonia is adsorbed by the SCR catalyst 41 so that NOx can be appropriately purified even in the case where aqueous urea solution cannot be added (for example, when aqueous urea solution is frozen), or in the case where ammonia is difficult to be generated even if aqueous urea solution is injected when the engine is in a cold state.

As described above, the urea injection valve 230 has a minimum valve open time during which aqueous urea solution is injected. Accordingly, an amount of aqueous urea solution less than a minimum amount of addition (minimum amount of injection) QMIN of aqueous urea solution obtained by the minimum valve open time and the supply pressure of aqueous urea solution cannot be injected through the urea injection valve 230. Accordingly, in the case of low load operation of the engine 1, when the amount of the generated NOx is considerably small, the amount of the addition of aqueous urea solution set by the equivalence ratio control is likely to be less than the minimum addition amount QMIN of aqueous urea solution. In this case, the amount of the actually injected aqueous urea solution is greater than the amount of aqueous urea solution in accordance with the amount of the generated NOx. Accordingly, an excess amount of aqueous urea solution with respect to the amount of the generated NOx is likely to be injected.

Therefore, in the present embodiment, the integrated value of the amount of the generated NOx is computed, and the addition of the additives is performed by injecting the additives through the urea injection valve 230 after the computed integrated value becomes greater than or equal to a predetermined reference value to control an excess amount of aqueous urea solution to be injected.

Fig. 2 shows the procedure of the above described addition process. The process is repeatedly performed by the control unit 80.

As the process is started, the control unit 80 first computes the amount of NOx generated in the cylinders as an NOx generation amount NT on the basis of the first NOx concentration N1 and the intake air amount GA (step S100).

Next, the control unit 80 determines whether or not an amount ΔNT of change of NOx is less than a determination value α (step S110). The NOx change amount ΔNT corresponds to the amount of change of the NOx generation amount NT for a predetermined period. For example, a difference between the NOx generation amount NT computed when the process is previously performed and the NOx generation amount NT computed when the process is performed this time may be set as the NOx change amount ΔNT. The determination value α is set such that it can be reliably determined, on the basis of the fact that the NOx change amount ΔNT is greater than the determination value α, whether or not the operation state of the current engine 1 is in a transition state in which the NOx generation amount is greatly changed so that the computation of the integrated value of the NOx generation amount cannot follow the change in the NOx generation amount.

When the NOx change amount ΔNT is less than the determination value α (step S110: YES), the control unit 80 determines that the engine 1 is not in the transition state but in the normal operation state in which the amount of the generated NOx is not greatly changed.

Next, the control unit 80 computes an integrated amount NTS of the generated NOx (step S120). The integrated NOx generation amount NTS is a value obtained by adding up the NOx generation amount NT. The integrated NOx generation amount when the process is performed this time is computed by adding the above described NOx generation amount NT computed when the process is performed this time to the integrated NOx generation amount NTS computed when the process is performed previously. The initial value of the integrated NOx generation amount NTS is set to zero. Therefore, when aqueous urea solution has never been injected after the engine is started, the integrated NOx generation amount NTS corresponds to an integrated value of the amount of NOx generated in the cylinders from when the engine 1 is started to present. As will be described below, when adding the urea, the integrated NOx generation amount NTS is reset to zero prior to performing the addition of the urea. Accordingly, when there is a history that aqueous urea solution is injected after the engine is started, the integrated NOx generation amount NTS corresponds to an integrated value of the amount of NOx generated in the cylinders from when aqueous urea solution is previously injected to present.

Next, the control unit 80 determines whether or not the integrated NOx generation amount NTS computed in step S120 is greater than or equal to a determination value β as a predetermined reference value (step S130). The determination value β is set to an amount CN of purification of NOx by which NOx can be purified by the above described minimum addition amount QMIN of aqueous urea solution that can be injected through the urea injection valve 230.

When the integrated NOx generation amount NTS is less than the determination value β (step S130: NO), the integrated NOx generation amount NTS is less than the above described amount CN of purification. That is, when the minimum addition amount QMIN of aqueous urea solution is added, even if all of the generated NOx is purified, ammonia still remains so that the an excess amount of aqueous urea solution with respect to the amount of the generated NOx is added. Accordingly, in this case, the control unit 80 temporarily ends the process without adding urea. In the case where the process is performed next time or later, the integrated NOx generation amount NTS is increased each time it is determined it is true in step S110.

When the integrated NOx generation amount NTS becomes great as described above, and the control unit 80 determines that the integrated NOx generation amount NTS is greater than or equal to the determination value β (step S130: YES), the integrated NOx generation amount NTS is greater than or equal to the above described purification amount CN. That is, when the minimum addition amount QMIN of aqueous urea solution is added, the ammonia generated from the added aqueous urea solution does not remain because all of the added aqueous urea solution is used for purifying NOx. Accordingly, no excess amount of aqueous urea solution with respect to the amount of the generated NOx is added. Although the urea injection valve 230 cannot inject the amount of aqueous urea solution less than the minimum addition amount QMIN of aqueous urea solution, it can inject the amount of aqueous urea solution greater than or equal to the minimum addition amount QMIN of aqueous urea solution. Then, the control unit 80 sets an urea addition amount QE in accordance with the integrated NOx generation amount NTS that is greater than the determination value β, namely the urea addition amount QE necessary for purifying NOx generated during the period from when the adding up of the NOx generation amount NT is started to when the integrated value is beyond the determination value β (step S140).

After the control unit 80 sets the urea addition amount QE as described above, the integrated NOx generation amount NTS is reset to zero (step S150). The control unit 80 performs the addition of the urea by the urea addition amount QE set in step S140 (step S160), and temporarily ends the process.

In contrast, when the control unit 80 determines that the NOx change amount ΔNT is greater than or equal to the determination value α in the above described step S110 (step S110: NO), the control unit 80 determines that the engine 1 is in the transition state, and that the amount of the generated NOx is greatly changed. When it is determined that it is false in step S110, the urea addition amount QE in accordance with the NOx generation amount NT, namely the urea addition amount QE necessary for purifying the amount of the generated NOx presently detected is set (step S170).

After the control unit 80 sets the urea addition amount QE as described above, the integrated NOx generation amount NTS is reset to zero and the computation of the integrated NOx generation amount NTS is stopped (step S150). The control unit 80 performs the addition of urea by the urea addition amount QE set in step S170 (step S160), and temporarily ends the process.

The operation of the above described addition process will be described.

In step S130 shown in above Fig. 2, the control unit 80 determines whether or not the integrated NOx generation amount NTS is greater than or equal to the determination value β. The determination value β is set to a value of the NOx purification amount CN by which NOx can be purified by the minimum addition amount QMIN of aqueous urea solution that can be injected through the urea injection valve 230.

When the integrated NOx generation amount NTS is less than the determination value β (step S130: NO), namely when the integrated NOx generation amount NTS is less than the NOx purification amount CN by which NOx can be purified by the minimum addition amount QMIN of urea that can be injected through the urea injection valve 230, and the amount CN of purification is less than the amount of the generated NOx, the computation of the integrated NOx generation amount NTS is continued. When the integrated NOx generation amount NTS is greater than or equal to the determination value β (step S130: YES), the addition of the urea is performed (step S160).

When the above described addition is performed as described above, the injection of aqueous urea solution is performed after the integrated NOx generation amount NTS becomes greater than or equal to the determination value β (reference value). Accordingly, when the above described addition is performed, the injection of aqueous urea solution is not performed while the amount of the generated NOx is small and the integrated NOx generation amount NTS is less than the determination value β. Accordingly, when the amount of the generated NOx is small and the amount of addition of aqueous urea solution in accordance with the amount of the generated NOx is less than the minimum addition amount QMIN, the injection of aqueous urea solution is not performed. Therefore, the injection of an excess amount of aqueous urea solution with respect to the amount of the generated NOx is avoided.

Further, the SCR catalyst 41 can adsorb ammonia from aqueous urea solution as a purifying element of NOx, and purify NOx using the adsorbed ammonia. Accordingly, NOx can be purified by using the ammonia adsorbed by the SCR catalyst 41 during the period in which the integrated NOx generation amount NTS is less than the determination value β and the injection of aqueous urea solution is not performed. Therefore, NOx can be purified even during the period in which the injection of aqueous urea solution is not performed.

Further, when the integrated NOx generation amount NTS is greater than or equal to the determination value β so that aqueous urea solution is injected, the urea addition amount QE is set in accordance with the integrated NOx generation amount NTS in step S140. Accordingly, when the addition of urea is performed in step S160, the amount of aqueous urea solution in accordance with the integrated NOx generation amount NTS is injected through the urea injection valve 230. Therefore, the amount of adsorption of the ammonia consumed by the SCR catalyst 41 during the period in which the injection of aqueous urea solution is not performed is recovered.

In contrast, when the engine operation state is in the transition state, the amount of the generated NOx varies more greatly than in the normal operation state. If the computation of the integrated NOx generation amount NTS cannot follow the variation of the amount of the generated NOx, a gap is generated between the actual integrated value of the amount of the generated NOx and the integrated value on the computation.

For example, the amount of the generated NOx increases at the time of the transition in which the engine load increases. If the computation of the integrated NOx generation amount NTS cannot follow the increase of the amount of the generated NOx, the integrated NOx generation amount NTS as the integrated value on computation is computed as a value less than the actual integrated value of the amount of the generated NOx. Accordingly, although the actual integrated value of the amount of the generated NOx is greater than or equal to the determination value β, the integrated NOx generation amount NTS is less than the determination value β so that the injection of aqueous urea solution is not performed. Therefore, NOx is likely to be not appropriately purified.

Further, for example, the amount of the generated NOx decreases at the time of the transition in which the engine load decreases. If the computation of the integrated NOx generation amount NTS cannot follow the decrease of the amount of the generated NOx, the integrated NOx generation amount NTS as the integrated value on computation is computed as a value greater than the actual integrated value of the amount of the generated NOx. Accordingly, although the actual integrated value of the amount of the generated NOx is less than the determination value β, the integrated NOx generation amount NTS is greater than or equal to the determination value β so that the injection of aqueous urea solution is performed. Therefore, an excess amount of aqueous urea solution with respect to the amount of the generated NOx is likely to be injected.

Accordingly, the control unit 80 determines whether or not the NOx change amount ΔNT is less than the determination value α in step S110 to determine whether or not the engine operation state is in the transition state. When the engine operation state is in the transition state, the control unit 80 resets the integrated NOx generation amount NTS to zero in step S150 to stop the computation of the integrated NOx generation amount NTS. The control unit 80 then sets the urea addition amount QE in accordance with the NOx generation amount NT, namely the urea addition amount QE necessary for purifying the amount of the generated NOx presently detected in step S170. When the addition of urea is performed in step S160, the amount of aqueous urea solution in accordance with the NOx generation amount NT is injected through the urea injection valve 230. Even if the computation of the integrated NOx generation amount NTS is thereby stopped, the amount of aqueous urea solution in accordance with the NOx generation amount NT is added. Therefore, even if the engine operation state is in the transition state, NOx is appropriately purified, and the injection of an excess amount of aqueous urea solution with respect to the amount of the generated NOx is avoided.

As described above, the present embodiment has the advantages described below.
(1) When the amount of the generated NOx is less than the NOx purification amount CN by which NOx can be purified by the minimum addition amount QMIN of aqueous urea solution that can be injected through the urea injection valve 230, the integrated NOx generation amount NTS is computed by multiplying the NOx generation amount NT. As for the determination value β, the NOx purification amount CN by which NOx can be purified by the minimum addition amount QMIN of aqueous urea solution that can be injected through the urea injection valve 230 is set as the determination value β. The injection of aqueous urea solution is performed after the integrated NOx generation amount NTS is greater than or equal to the determination value β. Accordingly, the injection of aqueous urea solution is limited in the case where the amount of the generated NOx is small and the amount of addition of aqueous urea solution in accordance with the amount of the generated NOx is less than the minimum addition amount QMIN. Therefore, the injection of an excess amount of aqueous urea solution with respect to the amount of the generated NOx is avoided.
(2) The SCR catalyst 41 that adsorbs the ammonia from aqueous urea solution as a purifying component of NOx, and purifies NOx using the adsorbed ammonia is provided. Therefore, NOx can be purified even during the period in which the injection of aqueous urea solution is not performed.
(3) When the injection of aqueous urea solution is performed after the integrated NOx generation amount NTS becomes greater than or equal to the determination value β, the amount of aqueous urea solution in accordance with the integrated NOx generation amount NTS is injected through the urea injection valve 230. Therefore, the amount of adsorption of the ammonia consumed by the SCR catalyst 41 during the period in which the injection of aqueous urea solution is not performed is recovered.
(4) When the engine operation state is in the transition state, the computation of the integrated NOx generation amount NTS is stopped, and the amount of aqueous urea solution in accordance with the amount of the generated NOx detected by the first NOx sensor 130 is injected through the urea injection valve 230. Therefore, even if the engine operation state is in the transition state, NOx is appropriately purified. Further, even if the engine operation state is in the transition state, the injection of an excess amount of aqueous urea solution with respect to the amount of the generated NOx is avoided.

The above embodiments may be modified as follows.
- In the above described embodiment, the NOx purification amount CN by which NOx can be purified by the minimum addition amount QMIN of aqueous urea solution that can be injected through the urea injection valve 230 is set as the determination value β. An amount greater than or equal to the amount CN of purification may be set as the determination value β. Even in this case, the injection of aqueous urea solution is limited when the amount of the generated NOx is small and the amount of addition of aqueous urea solution in accordance with the amount of the generated NOx is less than the minimum addition amount QMIN. Therefore, the injection of an excess amount of aqueous urea solution with respect to the amount of the generated NOx is avoided.
- When aqueous urea solution is added after the integrated NOx generation amount NTS becomes greater than or equal to the determination value β, the amount of aqueous urea solution in accordance with the integrated NOx generation amount NTS is injected through the urea injection valve 230. Another amount of aqueous urea solution may be injected. For example, an amount of aqueous urea solution in accordance with an amount obtained by adding the integrated NOx generation amount NTS and the NOx generation amount NT at present may be injected.
- In the illustrated embodiment, it is determined whether or not the engine operation state is in the transition state by the amount of change of the amount of the generated NOx. The determination may be made according in a manner different from that in the illustrated embodiment. For example, it may be determined whether or not the engine operation state is in the transition state on the basis of the amount of change of the intake air amount GA, the amount of change of the accelerator operation amount ACCP, or the amount of change of the amount of the fuel injection of the engine 1.

The process of step S110 and the process of step S170 shown in above Fig. 2 may be omitted. That is, the process of determining whether or not the engine operation state is in the transition state, and the process of setting the urea addition amount QE in accordance with the NOx generation amount NT when the engine operation state is in the transition state may be omitted. Even in this case, the above described advantages (1) to (3) are achieved.
- The first NOx sensor 130 directly detects the concentration of NOx proportional to the amount of the generated NOx. Further, the amount of the generated NOx may be indirectly detected by estimating the concentration of NOx and the amount of the generated NOx from the engine operation state.
- The SCR catalyst 41, which adsorbs the ammonia from aqueous urea solution and purifies NOx using the adsorbed ammonia, is provided as a catalyst for purifying NOx in the illustrated embodiment. Other types of catalyst may be provided. For example, a catalyst that cannot adsorb ammonia but has a surface on which aqueous urea solution and NOx are brought into contact with each other to purify NOx promptly may be used. Even in this case, the advantages other than the above described advantage (2) are achieved.
- The aqueous urea solution is used as the additives for reducing and purifying NOx. Other types of additives may be used. For example, ammonia gas may be directly generated from solid ammonia, and the generated ammonia gas may be added through the injection valve. Further, dimethyl ether may be used as an additive. Moreover, engine fuel containing HC constituent may be used as an additive.
- The additive feeder disclosed in the above described embodiments adds an additive to purify NOx. However, the present invention may also be applied to an additive feeder that adds an additive through the injection valve to purify other exhaust gas components. Description of the Reference Numerals

1... Engine, 2... Cylinder Head, 3... Intake Passage, 4a to 4d... Fuel Injection Valves, 5... Fuel Addition Valve, 6a to 6d... Exhaust Ports, 7... Intake Manifold, 8... Exhaust Manifold, 9...Common Rail, 10...Supply Pump, 11...Turbocharger, 11v...Nozzle Vane, 13... EGR Passage, 14... EGR Cooler, 15... EGR Valve, 16... Intake Throttle Valve, 17... Actuator, 18... Intercooler, 19...Air Flow Meter, 20...Throttle Valve Opening Degree Sensor, 21...Engine Rotation Speed Sensor, 22...Accelerator Operation Amount Sensor, 23...Ambient Temperature Sensor, 24... Vehicle Speed Sensor, 25... Ignition Sensor, 26... Exhaust Passage, 27... Fuel Feeding Tube, 30... First Purification Member, 31...Oxidation Catalyst, 32... Filter, 40... Second Purification Member, 41...NOx Purification Catalyst (Selective Reduction Type NOx Catalyst: SCR Catalyst), 50...Third Purification Member, 51...Ammonia Oxidation Catalyst, 60... Dispersion Plate, 80... Control Unit, 100... First Exhaust Gas Temperature Sensor, 110... Differential Pressure Sensor, 120... Second Exhaust Gas Temperature Sensor, 130... First NOx Sensor, 140... Second NOx Sensor, 200...Aqueous Urea Solution Feeding Mechanism, 210...Tank, 220... Pump, 230... Urea Injection Valve, and 240... Feeding Tube.

## Claims

1. An additive feeder for an internal combustion engine (1), comprising:
a catalyst (41) configured to purify NOx in the exhaust gas that is generated by combustion of an air-fuel mixture in a cylinder (#1 to #4);
an injection valve (230) configured to inject an additive in form of a reducing agent and to add the additive to the catalyst (41);
a detection portion (130) configured to detect an amount of the NOx that is generated; and
a control portion (80) configured to control an amount of the additive injected through the injection valve (230),
wherein the catalyst (41) is a SCR catalyst configured to adsorb an exhaust gas purifying component that is generated from the reducing agent and reduces NOx and to use the adsorbed purifying component to purify the NOx,
**characterized in that**
the control portion (80) is further configured to,
when an engine operation state is not in a transition state but in a normal operation state (S110: YES),
compute (S120) an integrated value (NTS) of the amount of the generated NOx from when the additive was injected previously, and to
perform (S160) an addition process in which the control portion (80) causes the injection valve (230) to inject the additive after the integrated value (NTS) has become greater than or equal to a reference value (β; S130: YES), wherein,
when the engine operation state is in a transition state (S110: NO), the control portion (80) stops computation of the integrated value (NTS) of the amount of generated NOx (S150) and causes (S170, S160) an amount of the additive in accordance with the amount of the generated NOx detected by the detection portion (130) to be injected through the injection valve (230).

2. The additive feeder for an internal combustion engine (1) according to claim 1,
wherein the reference value (β) is set to a value greater than or equal to an amount (CN) of purification of the NOx that can be purified by the minimum amount (QMIN) of the additive injectable through the injection valve (230).

3. The additive feeder for an internal combustion engine (1) according to claim 1 or 2, wherein, when injecting the additive according to the addition process, the control portion (80) causes (S140, S160) an amount of the additive in accordance with the integrated value (NTS) to be injected through the injection valve (230).

## Patentansprüche

1. Additiv-Zuführer für eine Verbrennungskraftmaschine (1), aufweisend:
einen Katalysator (41), der so konfiguriert ist, dass er NOₓ in dem Abgas reinigt, das durch ein Verbrennen eines Luft-/Kraftstoff-Gemisches in einem Zylinder (#1 bis #4) erzeugt wird;
ein Einspritzventil (230), das so konfiguriert ist, dass es ein Additiv in Form eines Reduktionsmittels einspritzt und das Additiv dem Katalysator (41) zuführt;
einen Erfassungsabschnitt (130), der so konfiguriert ist, dass er eine Menge des erzeugten NOₓ erfasst; und
einen Steuerabschnitt (80), der so konfiguriert ist, dass er eine Menge des Additivs steuert, die durch das Einspritzventil (230) eingespritzt wird,
wobei der Katalysator (41) ein SCR-Katalysator ist, der so konfiguriert ist, dass er einen Abgasreinigungsbestandteil adsorbiert, der aus dem Reduktionsmittel erzeugt wird, und NOₓ reduziert, und dass er den adsorbierten Reinigungsbestandteil verwendet, um das NOₓ zu reinigen,
**dadurch gekennzeichnet, dass**
der Steuerabschnitt (80) ferner so konfiguriert ist, dass er,
wenn ein Maschinen-Betriebszustand kein Übergangszustand, sondern ein normaler Betriebszustand ist (S110: JA),
einen Integralwert (NTS) der Menge des erzeugten NOₓ von dem Zeitpunkt an, da das Additiv zuvor eingespritzt wurde, berechnet (S120), und
ein Beigabeverfahren durchführt (S160), bei dem der Steuerabschnitt (80) das Einspritzventil (230) veranlasst, das Additiv einzuspritzen, nachdem der Integralwert (NTS) größer als oder gleich einem Referenzwert (β; S130: JA) geworden ist, wobei,
wenn der Maschinen-Betriebszustand ein Übergangszustand ist (S110: NEIN), der Steuerabschnitt (80) die Berechnung des Integralwerts (NTS) der Menge des erzeugten NOₓ stoppt (S150) und veranlasst, dass eine Menge des Additivs in Übereinstimmung mit der Menge des erzeugten NOₓ, die durch den Erfassungsabschnitt (130) erfasst wird, durch das Einspritzventil (230) eingespritzt wird (S170, S160).

2. Additiv-Zuführer für eine Verbrennungskraftmaschine (1) nach Anspruch 1, wobei der Referenzwert (β) auf einen Wert festgelegt ist, der größer als oder gleich einer Reinigungsmenge (CN) des NOₓ ist, die mit der Mindestmenge (QMIN) des Additivs, die durch das Einspritzventil (230) eingespritzt werden kann, gereinigt werden kann.

3. Additiv-Zuführer für eine Verbrennungskraftmaschine (1) nach Anspruch 1 oder 2, wobei, wenn das Additiv in Übereinstimmung mit dem Beigabeverfahren eingespritzt wird, der Steuerabschnitt (80) veranlasst (S140, S160), dass eine Menge des Additivs in Übereinstimmung mit dem Integralwert (NTS) durch das Einspritzventil (230) eingespritzt wird.

## Revendications

1. Dispositif d'alimentation en additif pour un moteur à combustion interne (1) comprenant :
un catalyseur (41) configuré pour purifier le NOx dans les gaz d'échappement qui est généré par la combustion d'un mélange air-carburant dans un cylindre (#1 à #4) ;
une soupape d'injection (230) configurée pour injecter un additif sous la forme d'un agent de réduction et pour ajouter l'additif au catalyseur (41) ;
une partie de détection (130) configurée pour détecter une quantité de NOx qui est généré ; et
une partie de commande (80) configurée pour commander une quantité de l'additif injecté par la soupape d'injection (230),
dans lequel le catalyseur (41) est un catalyseur SCR configuré pour adsorber un composant de purification de gaz d'échappement qui est généré à partir de l'agent de réduction et réduit le NOx et pour utiliser le composant de purification adsorbé afin de purifier le NOx,
**caractérisé en ce que** :
la partie de commande (80) est en outre configurée pour :
lorsqu'un état de fonctionnement du moteur n'est pas dans un état de transition, mais dans un état de fonctionnement normal (S110 : OUI),
calculer (S120) une valeur intégrée (NTS) de la quantité de NOx généré à partir du moment où l'additif a été injecté préalablement, et pour :
réaliser (S160) un processus d'ajout dans lequel la partie de commande (80) amène la soupape d'injection (230) à injecter l'additif après que la valeur intégrée (NTS) est devenue supérieure ou égale à une valeur de référence (β ; S130 : OUI), dans lequel :
lorsque l'état de fonctionnement du moteur est dans un état de transition (S110 : NON), la partie de commande (80) arrête le calcul de la valeur intégrée (NTS) de la quantité de NOx (S150) généré et amène (S170, S160) une quantité d'additif selon la quantité de NOx généré détectée par la partie de détection (130) à être injectée par la soupape d'injection (230).

2. Dispositif d'alimentation en additif pour un moteur à combustion interne (1) selon la revendication 1,
dans lequel la valeur de référence (β) est une valeur supérieure ou égale à une quantité (CN) de purification du NOx qui peut être purifiée par la quantité minimum (QMIN) d'additif injectable par la soupape d'injection (230).

3. Dispositif d'alimentation en additif pour un moteur à combustion interne (1) selon la revendication 1 ou 2, dans lequel lors de l'injection de l'additif selon le processus d'ajout, la partie de commande (80) amène (S140, S160) une quantité d'additif selon la valeur intégrée (NTS) à être injectée par la soupape d'injection (230).
